# EUROPEAN PATENT SPECIFICATION

(11) **EP 0 805 735 B1**
(45) Date of publication and mention of the grant of the patent: **29.03.2000**
(21) Application number: 94926541.7
(22) Date of filing: 17.08.1994
(51) Int. Cl.: B24D 3/28, B24C 9/00

(54) **METHOD OF REGENERATING BLASTING MEDIA FOR USE IN PRESSURIZED DEVICE**
RÜCKGEWINNUNGSVERFAHREN EINES STRAHLMEDIUMS ZUR VERWENDUNG IN EINER MIT DRUCK BEAUFSCHLAGTEN VORRICHTUNG
PROCEDE DE REGENERATION DE LA GRENAILLE, UTILE DANS UN DISPOSITIF SOUS PRESSION

(43) Date of publication of application: 12.11.1997
(73) Proprietor: ADVANCED RECYCLABLE MEDIA SYSTEMS, INC., Durham, NC 27703 (US); Parent, Wilfred, Paul, Milton NH 03851 (US); Lynn, William R., Dover, New Hampshire 03820 (US)
(72) Inventor: ADVANCED RECYCLABLE MEDIA SYSTEMS, INC., Durham, NC 27703 (US); Parent, Wilfred, Paul, Milton NH 03851 (US); Lynn, William R., Dover, New Hampshire 03820 (US)
(74) Representative: Watts, Peter Graham
(86) International application number: US9409411
(87) International publication number: WO9605021

(56) References cited:
- DE-A- 4 214 988
- US-A- 2 426 072
- US-A- 4 827 678
- US-A- 5 146 716
- US-A- 5 234 470
- US-A- 5 256 703
- US-A- 5 344 472
- PATENT ABSTRACTS OF JAPAN vol. 14, no. 285 (M-0987), 20 June 1990 & JP 02 088175 A (ARON KASEI CO. LTD. ET AL.), 28 March 1990, & DATABASE WPI Section Ch, Week 9019 Derwent Publications Ltd., London, GB; Class ALP, AN 90-142956 (19) & JP 02 088 175 A (ARON KASEI K.K. AND KENKO SANGYO K.K.) , 28 March 1990
- PATENT ABSTRACTS OF JAPAN vol. 17, no. 478 (C-1104), 31 August 1993 & JP 05 117635 A (O S G K.K.), 14 May 1993, & DATABASE WPI Section Ch, Week 9324 Derwent Publications Ltd., London, GB; Class AL, AN 93-191766 (24) & JP 05 117 635 A (OSG K.K.) , 14 May 1993

## Description

This invention relates to a method of remaking and/or regenerating media, for use in suitable blasting equipment, so that such remade and/or regenerated media may be again used in suitable blasting equipment and propelled, via a pressurized air stream, against a surface of an object to dislodge and/or absorb any contaminant thereon. The contaminant or contaminants to be removed may include any foreign substance attached to or carried by the surface such as hazardous materials, soil, grease, oil, paint, soot, solvents and other objectionable deposits. The invention also relates to a method of minimizing waste associated with removing contaminants or debris from a desired surface.

### Background of the Invention

The present invention is particularly directed at remaking and/or regenerating media which is commonly referred to as "composite media" which comprises a plurality of discrete particles of an abrasive component mixed with and attached to a carrier component. The abrasive component and carrier component are selected to provide desired wear of the composite media, during use, to expose additional underlying abrasive media and to enhance cleaning of the surface being treated. The composite media facilitates feeding of the blasting media and results in deeper penetration of the blasting media into the surface being treated. A number of known blasting media compositions, which are particularly adapted for remaking and/or regenerating, are disclosed in United States Patent No. 5,234,470 issued August 10, 1993 to William R. Lynn and Wilfred P. Parent.

### Summary of the Invention:

Wherefore, it is an object of the invention to facilitate recycling, rebuilding, regenerating, recombining, reusing and/or repairing of the blasting media on site to minimize the waste associated with a blasting operation and maximize efficient use of the blasting media.

Yet another object of the invention is to provide a method of collecting, screening, sifting and/or separating of the used composite blasting media from the debris and other contaminants and to clean and recycle the composite blasting media to produce new granules of the composite blasting media which each contain additional abrasive component and/or carrier component.

A further object of the invention is to select the carrier component to be capable of physically carrying the abrasive component while controlling dust and prolonging the integrity of the abrasive component. As the composite blasting media begins to wear, the composite blasting media is recycled by adding additional abrasive component and/or carrier component to the used composite blasting media and this mixture is formed into new larger granules each containing the carrier component and the abrasive component.

Still another object of the invention is to add a liquid or solid substance or a bacteria or fungus to the composite blasting media which will assist the composite blasting media in decomposing or decompose the absorbed contaminant and debris over a desired period of time. The substance is typically added just prior to use.

The present invention relates to a method of recycling a used composite blasting media after being propelled through desired blasting equipment, said composite blasting media comprising a plurality of granules which each contain a plurality of discrete particles of an abrasive component physically interconnected with one another by a carrier component, which is a solid at room temperature,
said method comprising the steps of:
collecting the composite blasting media after at least one blasting cycle;
mixing at least one of additional abrasive component and additional carrier component with the collected composite blasting media; and
forming the mixture of composite blasting media into a plurality of granules each containing a plurality of discrete particles of the abrasive component physically interconnected with one another by the carrier component.

The present invention further relates to a method of forming a recyclable granulated composite blasting media for use in treating a surface to remove undesired contaminants therefrom, said composite blasting media being suitable for being propelled via a fluid stream through desired blasting equipment;
said method comprising the steps of:
forming granules of the composite blasting media, each said granule comprising a plurality of discrete particles of an abrasive component physically interconnected with one another by a carrier component, which is solid at room temperature, the carrier component being selected to wear, during use of the composite blasting media, at a rate so as to continuously expose additional underlying abrasive particles on an exterior surface of that composite media particle, but not at a rate to allow the premature separation of the abrasive particles from an exterior surface of that composite media particle;
propelling the recyclable composite blasting media through desired blasting equipment to treat a desired surface;
collecting the composite blasting media with a collecting device and cleaning the collected composite blasting media, after at least one blasting cycle, with a cleaning device; and
reforming the composite blasting media into a plurality of granules each containing a plurality of discrete particles of an abrasive component physically interconnected with one another by a carrier component.

Finally, the present invention further relates to a method of recycling a used composite blasting media after being propelled through desired blasting equipment, said composite blasting media comprising a plurality of granules which each contain a plurality of discrete particles of an abrasive component physically interconnected with one another by a carrier component, which is solid at a temperature below room temperature,
said method comprising the following steps all occurring at a temperature below room temperature:
collecting the composite blasting media after at least one blasting cycle;
mixing at least one of additional abrasive component and additional carrier component with the collected composite blasting media; and
forming the mixture of composite blasting media into a plurality of granules each containing a plurality of discrete particles of the abrasive component physically interconnected with one another by the carrier component.

These and other objects of the invention will better understood by those skilled in the art by having reference to the appended drawings and the following description.

### Brief Description of the Drawings:

The invention will now be described, by way of example, with reference to the accompanying drawings in which:
Figure 1 diagrammatically shows a feed mechanism for supplying the blasting media to the blasting nozzle;
Figure 2 diagrammatically shows one embodiment of the method of collecting and recycling the composite blasting media; and
Figure 3 diagrammatically shows a second embodiment of the method of collecting and recycling the composite blasting media.

### Description of the Preferred Embodiments

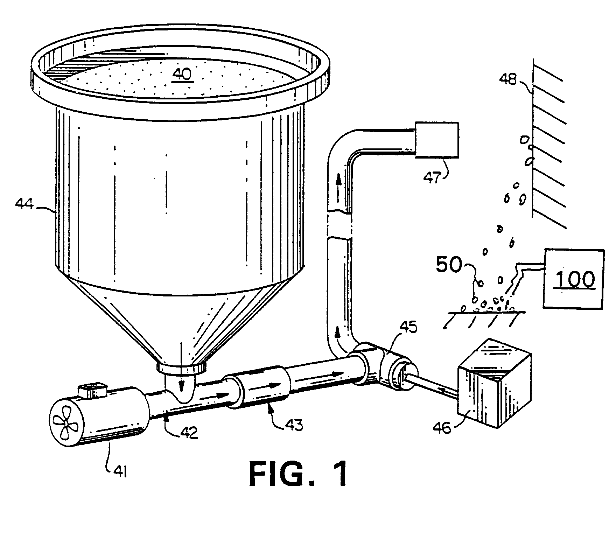

Suitable blasting equipment, for propelling blasting media against a desired surface is shown in Figure 1. As such equipment is well known in the art, it is only briefly discussed hereinafter. The improved composite media 40 is supplied to and contained within a hopper 44. An outlet of the hopper is connected with a positive feed mechanism 42 such as an auger driven by a motor 41. The auger conveys the blasting media 40 through a one way valve 43 toward a T-fitting 45. Pressurized air is supplied from air pressure source 46 to a second inlet of the T-fitting 45. The pressurized air in the conveying blasting media combined with one another and are mixed and conveyed out an outlet of the T-fitting 45 toward the nozzle 47 for a discharge against a desired surface 48.

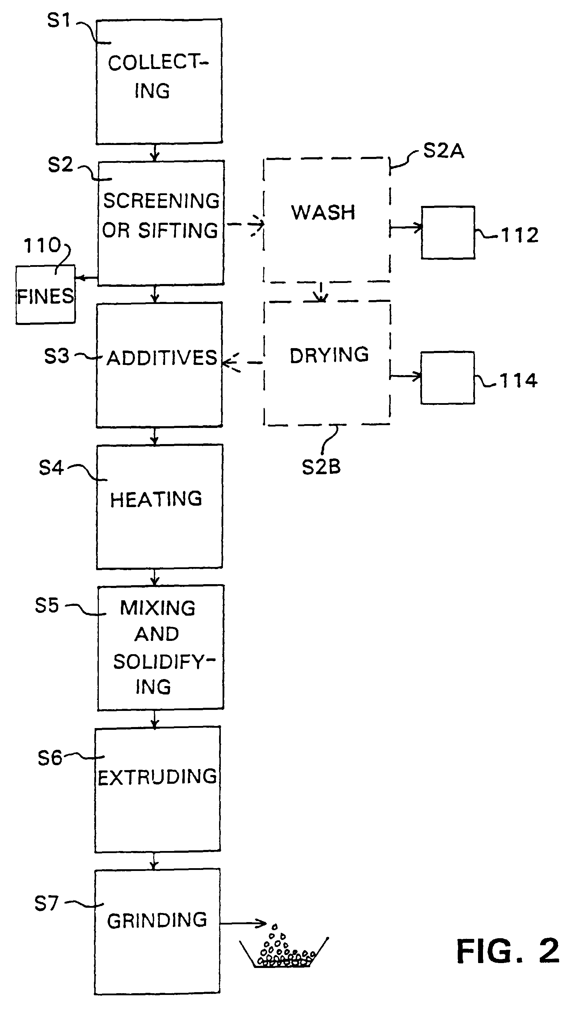

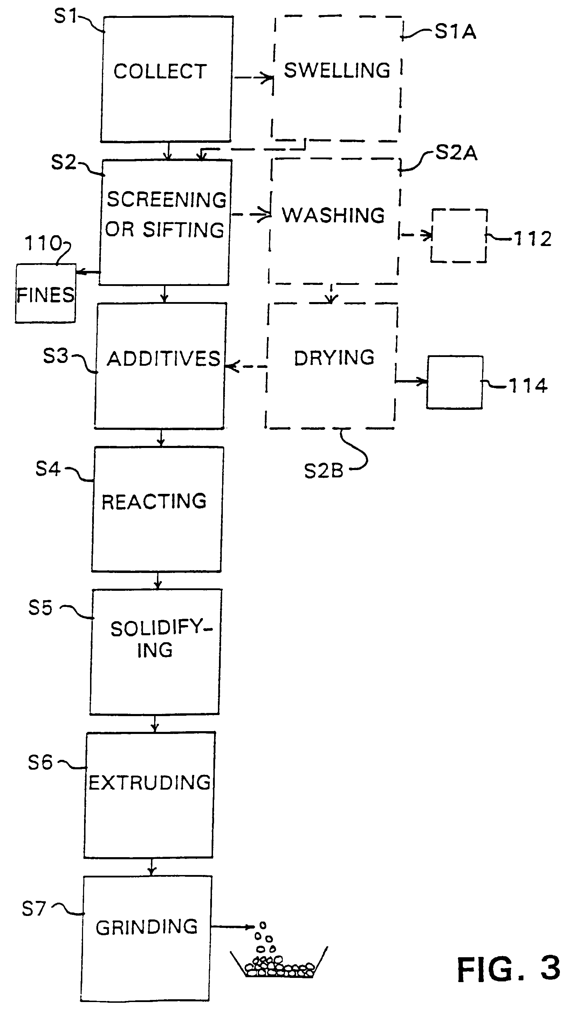

With reference to Figures 1 through 3, the method of recycling the composite blasting media according to the present invention will now be described in detail. The regenerated composite blasting media according to the present invention is unique because the abrasive component is physically (mechanically, chemically, etc.) supported or held by the carrier component. Further, the carrier component can be selected to control the generation of dust and prolong the useful life, e.g. the integrity, etc., of the abrasive component as the carrier component can absorb much of the impact energy upon striking the surface being treated. As the media begins to wear, additional abrasive components are continually exposed. Once the carrier component has been sufficiently worn, i.e. after the blasting media 50 has been reused through the blasting equipment a sufficient amount of times (e.g. 5-9 cycles) and discharged via the nozzle 47 against the surface 48 to be treated, the used blasting media is collected (step S1), by a suitable collection means 100. One such suitable collection means would, for example, be an operator sweeping the media particles into a pile and collecting the same with a dust pan or, preferably, using some sort of vacuum device to suck up all of the blasting media particles 50. Once the media particles are collected (Figs. 2 and 3), they can be either screened or sifted (step S2) to separate the small particles, fines and other contaminates and debris 110 from the recyclable composite blasting media. If desired, the screening step can be replaced or used in combination with a washing step (step S2A) to wash away and/or dissolve any matter that may be soluble in water or some other desired cleansing solution 112. If the washing step is employed, the washed composite blasting media is typically air dried or squeezed (step S2B) after the washing step to remove the residual liquid and/or moisture 114.

Next, the cleaned composite blasting media is mixed (step S3) with at least one of additional abrasive component and/or carrier component to replenish the consumed, fractured, abraded and/or spent abrasive component and/or carrier component. In Fig. 2, this mixture is typically heated (step S4) to a desired temperature, depending upon the composition of the carrier component, to melt the carrier component into liquid form and physically entrap, encapsulate and/or bond the added abrasive and/or carrier components with the recycled abrasive and carrier components.

The heated mixture of the composite blasting media is then thoroughly mixed to achieve a uniform mixture of the abrasive and the carrier components and allowed to solidify (step S5). Thereafter, the solidified composite blasting media is extruded (step S6) through suitable extruding equipment, such as an extruder manufactured by American Mapla Corp., 283 South Bypass, Mcpherson, Kansas. The extruded composite blasting media is finally ground (step S7) by suitable grinding equipment, such as a grinder manufactured by Nelmor Plastic Machinery of Nuxbridge, Massachusetts (model #G1012M1), into a plurality of granules of a desired particle size, each granules comprising a plurality of abrasive components and carrier components physically interconnected with one another. The size of the granules is selected according to the blasting application for which the particles will be used.

Alternatively, depending upon the kind of material used as the carrier component, (Fig. 3) the recycled composite blasting media is collected (step S1), screened or sifted (step S2), and, if desired, washed (step S2A) and dried (step S2B), and then additional abrasive component and/or carrier component may be is added to the cleaned composite blasting media (step S3), the same as with the previous embodiment. Thereafter, the mixture of the abrasive and carrier components is allowed to react and chemically bond with one another (step S4). The chemically bonded composite blasting media is then allowed to set or solidify (step S5), is extruded (step S6) by suitable extruding equipment, and finally ground (step S7) by suitable grinding equipment into granules of a desired particle size.

If a foam is used as a carrier component of the composite media, water or another liquid may be added to and absorbed by the foam carrier component (step 1A) which will cause the foam carrier component to swell to a larger particle size (Fig. 3). The swollen foam is much easier to separate in the screening or sifting step (step S2) as the contaminates and debris, such as lead paint which are either not soluable or readily soluable in water, readily pass through the screen or other sifting member while the swollen foam carrier component, of a sufficiently larger size, containing the abrasive component is readily retained. The screened and swollen composite blasting media can then either be dried or squeezed, to remove the water or other cleaning fluid therefrom, before the composite blasting media is mixed with additional abrasive component and/or carrier component.

In an attempt to produce and recycle/recombine media on site, an experiment was performed by the inventors. Mixtures of hydrophilic polyol, gypsum and water were tried in various experiments. The gypsum proved to be very difficult to bond and dusted unacceptably when used in a blasting equipment. Accordingly, further tests with gypsum were abandon in favor of garnet and steel shot. In a unique two step portable mixture was developed by the inventors and they discovered that garnet, mixed with the hydrophilic polyol and water procedure, worked well.

If the composite blasting media comprises a slurry of water, or some other freezable liquid, and an abrasive component, the slurry is completely mixed and then frozen to solidify the mixture. Thereafter, the frozen liquid can then be ground into a plurality of discrete particles each containing the carrier component (e.g. water) and the abrasive component. In such grinding application, the grinder is typically located in a room which is maintained at a temperature below the freezing temperature of water or another liquid used as the carrier component, e.g. 0°C, to minimize any melting of the frozen slurry.

If a frozen liquid is used as the composite blasting media, preferably the blasting will occur in a temperature controlled or a chilled environment (e.g. below 0° C). Such an environment will minimize any melting of the frozen liquid during use and to facilitate collection of the used blasting media, cleaning, and recycling of the blasting media.

Alternatively, it would be possible to impregnate or mechanically force the abrasive component into a pliable carrier component, such as a soft plastic (e.g. high density polyethylene; low density polyethylene; polypropylene; poly(vinyl chloride); polystyrene; ply(acrylonitrile-butadiene-styrene); and polyurethane), putty, etc. In order to recycle the plastic or putty containing an abrasive component, the fines, the contaminates and the other debris is first separated from the reusable media and then additional abrasive and/or carrier component, e.g. soft plastic and putty material, is added to the collected mixture. The abrasive is then impregnated or mechanically forced into the soft plastic or putty, thoroughly mixed, extruded, if necessary, and finally reground into particles of a desired particle size for further use.

It is possible to use an air washer to clean the collected blasting media (step S2). One such suitable air washer is manufacturer by Invincible Air Flow Systems of Dover, Ohio (model no. 700-10). It is also possible, depending on the type of debris or abrasive material used, to use a magnetic separator to separate the fines, the debris and the contaminates from the recyclable composite media material. A suitable magnetic separator is manufactured by Eriez Magnetics Inc. of Erie, Pennsylvania (model no. A magnetic rotor).

By recycling and regenerating most of the composite blasting media, a substantial cost savings in the amount of material which must be properly disposed of is achieved. Thus, the recyclable composite blasting media according to the present invention is beneficial to the environment in general.

## Claims

1. A method of recycling a used composite blasting media after being propelled through desired blasting equipment, said composite blasting media comprising a plurality of granules which each contain a plurality of discrete particles of an abrasive component physically interconnected with one another by a carrier component, which is a solid at room temperature,
said method comprising the steps of:
collecting the composite blasting media after at least one blasting cycle;
mixing at least one of additional abrasive component and additional carrier component with the collected composite blasting media; and
forming the mixture of composite blasting media into a plurality of granules each containing a plurality of discrete particles of the abrasive component physically interconnected with one another by the carrier component.

2. A method of recycling the composite blasting media of claim 1, further comprising one or more of the following steps of:
washing, in a washing device, the collected composite blasting media with a cleaning solution prior to the mixing step;
cleaning the collected composite blasting media, with a cleaning device, prior to the mixing step;
screening the collected composite blasting media prior to the mixing step;
using the composite blasting media a plurality of times prior to recycling the composite blasting media; and
separating recyclable composite blasting media, with a separating device, from fines, debris and contaminates after the collecting step and prior to the mixing step.

3. A method of recycling the composite blasting media of claim 2, further comprising the step of removing moisture from the washed composite blasting media, with a moisture removing mechanism, prior to the mixing step.

4. A method of recycling the composite blasting media of claim 1, characterized in that said mixing step comprises the step of mixing both additional abrasive component and additional carrier component with the collected composite blasting media; and
said forming step comprises the steps of:
heating the mixture of the composite blasting media to melt the carrier component, which is a solid at room temperature;
allowing the heated composite blasting media to cool to a solidifying temperature of the carrier component and thereby solidify the composite blasting media; and
grinding the composite blasting media into a plurality of granules each containing a plurality of discrete particles of the abrasive component physically interconnected with one another by the carrier component.

5. A method of recycling the composite blasting media of claim 4, further comprising, prior to allowing the heated composite blasting media to solidify, the step of thoroughly mixing the heated composite blasting media to form a uniform mixture thereof.

6. A method of recycling the composite blasting media of claim 1, after the collecting step but prior to the mixing step, further comprising one or more of the following steps:
causing the collected composite blasting media to swell by allowing the collected composite blasting media to absorb liquid;
screening the swelled composite blasting media with a screening device so as to allow fines and other debris and contaminates to pass through the screening device while retaining the swollen composite blasting media; and
removing the absorbed liquid from the composite blasting media with a liquid absorbing mechanism.

7. A method of recycling the composite blasting media of claim 1, characterized in that said forming step comprises the steps of:
allowing the mixture of the composite blasting media with at least one of additional abrasive component and additional carrier component to chemically react with one another;
allowing the chemically reacted composite blasting media to solidify;
grinding the composite blasting media into a plurality granules each containing a plurality of discrete particles of the abrasive component physically interconnected with one another by the carrier component; and
prior to allowing the chemically reacted composite blasting media to solidify, thoroughly mixing the mixture of the composite blasting media to form a uniform mixture thereof.

8. A method of recycling the composite blasting media of claim 1, characterized in that said forming step comprises the steps of:
impregnating additional abrasive component into the carrier component; and
grinding the composite blasting media into a plurality granules each containing a plurality of discrete particles of an abrasive component physically interconnected with one another by the carrier component.

9. A method of forming a recyclable granulated composite blasting media for use in treating a surface to remove undesired contaminants therefrom, said composite blasting media being suitable for being propelled via a fluid stream through desired blasting equipment;
said method comprising the steps of:
forming granules of the composite blasting media, each said granule comprising a plurality of discrete particles of an abrasive component physically interconnected with one another by a carrier component, which is solid at room temperature, the carrier component being selected to wear, during use of the composite blasting media, at a rate so as to continuously expose additional underlying abrasive particle, but not at a rate to allow the premature separation of the abrasive particles from an exterior surface of that composite media particle;
propelling the recyclable composite blasting media through desired blasting equipment to treat a desired surface;
collecting the composite blasting media with a collecting device and cleaning the collected composite blasting media, after at least one blasting cycle, with a cleaning device;
mixing at least one of additional abrasive component and additional carrier component with the collected composite blasting media; and
reforming the mixture into a plurality of granules each containing a plurality of discrete particles of an abrasive component physically interconnected with one another by a carrier component.

10. A method of recycling a used composite blasting media after being propelled through desired blasting equipment, said composite blasting media comprising a plurality of granules which each contain a plurality of discrete particles of an abrasive component physically interconnected with one another by a carrier component, which is solid at a temperature below room temperature,
said method comprising the following steps occurring at a temperature below room temperature:
collecting the composite blasting media after at least one blasting cycle;
mixing at least one of additional abrasive component and additional carrier component with the collected composite blasting media; and
forming the mixture of composite blasting media into a plurality of granules each containing a plurality of discrete particles of the abrasive component physically interconnected with one another by the carrier component.

## Patentansprüche

1. Recyclingverfahren für ein verbrauchtes Sandstrahl-Verbundmedium, nachdem es durch die gewünschte Sandstrahlausrüstung befördert wurde, wobei dieses Sandstrahl-Verbundmedium eine Vielzahl von Körnchen umfaßt, die jeweils eine Vielzahl von diskreten Teilchen einer Schleifkomponente enthalten, die durch eine Trägerkomponente, die bei Raumtemperatur ein Feststoff ist, physikalisch miteinander verbunden sind,
wobei dieses Verfahren die Stufen umfaßt:
Sammeln des Sandstrahl-Verbundmediums nach wenigstens einem Sandstrahlzyklus;
Mischen von wenigstens einem von einer zusätzlichen Schleifkomponente und einer zusätzlichen Trägerkomponente mit dem gesammelten Sandstrahl-Verbundmedium; und
Formen der Mischung aus Sandstrahl-Verbundmedium zu einer Vielzahl von Körnchen, die jeweils eine Vielzahl von diskreten Teilchen der Schleifkomponente enthalten, die durch die Trägerkomponente physikalisch miteinander verbunden sind.

2. Recyclingverfahren für ein Sandstrahl-Verbundmedium nach Anspruch 1, das außerdem einen oder mehrere der folgenden Schritte umfaßt:
Waschen des gesammelten Sandstrahl-Verbundmediums mit einer Reinigungslösung in einer Waschvorrichtung vor dem Mischschritt;
Reinigen des gesammelten Sandstrahl-Verbundmediums mit einer Reinigungsvorrichtung vor dem Mischschritt;
Sieben des gesammelten Sandstrahl-Verbundmediums vor dem Mischschritt;
mehrfaches Verwenden des Sandstrahl-Verbundmediums vor dem Recyclen des Sandstrahl-Verbundmediums; und
Abtrennen des recyclefähigen Sandstrahl-Verbundmediums vom Abrieb, von Trümmern und von Verunreinigungen mit einer Abtrennvorrichtung nach dem Sammelschritt und vor dem Mischschritt.

3. Recyclingverfahren für ein Sandstrahl-Verbundmedium nach Anspruch 2, das außerdem den Schritt des Entfernens von Feuchtigkeit aus dem gewaschenen Sandstrahl-Verbundmedium mit einer Feuchtigkeitsentfernungsvorrichtung vor dem Mischschritt umfaßt.

4. Recyclingverfahren für ein Sandstrahl-Verbundmedium nach Anspruch 1, dadurch gekennzeichnet, daß dieser Mischschritt den Schritt des Mischens von sowohl der zusätzlichen Schleifkomponente als auch der zusätzlichen Trägerkomponente mit dem gesammelten Sandstrahl-Verbundmedium umfaßt; und
daß der Formungsschritt die Schritte umfaßt:
Erwärmen der Mischung des Sandstrahl-Verbundmediums, um die Trägerkomponente zu schmelzen, die bei Raumtemperatur ein Feststoff ist;
Abkühlenlassen des erwärmten Sandstrahl-Verbundmediums auf eine Erstarrungstemperatur der Trägerkomponente und damit Verfestigen des Sandstrahl-Verbundmediums; und
Vermahlen des Sandstrahl-Verbundmediums zu einer Vielzahl von Körnchen, die jeweils eine Vielzahl von diskreten Teilchen der Schleifkomponente enthalten, die durch die Trägerkomponente physikalisch miteinander verbunden sind.

5. Recyclingverfahren für ein Sandstrahl-Verbundmedium nach Anspruch 4, das außerdem vor dem Abkühlenlassen des erwärmten Sandstrahl-Verbundmediums zu seiner Verfestigung die Stufe der innigen Vermischung des erwärmten Sandstrahl-Verbundmediums umfaßt, um eine einheitliche Mischung davon zu bilden.

6. Recyclingverfahren für ein Sandstrahl-Verbundmedium nach Anspruch 1, das außerdem nach dem Sammelschritt, aber vor dem Mischschritt einen oder mehrere der folgenden Schritte umfaßt:
das Quellenlassen des gesammelten Sandstrahl-Verbundmediums, indem man das gesammelte Sandstrahl-Verbundmedium Flüssigkeit absorbieren läßt;
Sieben des gequollenen Sandstrahl-Verbundmediums mit einer Siebvorrichtung, um Abrieb und anderen Trümmern und Verunreinigungen durch die Siebvorrichtung durchtreten zu lassen, während das gequollene Sandstrahl-Verbundmedium zurückgehalten wird; und
Entfernen der absorbierten Flüssigkeit aus dem SandstrahlVerbundmedium mit einer Flüssigkeitsabsorptionsvorrichtung.

7. Recyclingverfahren für ein Sandstrahl-Verbundmedium nach Anspruch 1, dadurch gekennzeichnet, daß der Formungsschritt die Schritte umfaßt:
chemisches Reagierenlassen der Mischung des Sandstrahl-Verbundmediums mit wenigstens einem von einer zusätzlichen Schleifkomponente und einer zusätzlichen Trägerkomponente;
Erstarrenlassen des chemisch reagierten Sandstrahl-Verbundmediums;
Vermahlen des Sandstrahl-Verbundmediums zu einer Vielzahl von Körnchen, die jeweils eine Vielzahl von diskreten Teilchen der Schleifkomponente enthalten, die durch die Trägerkomponente physikalisch miteinander verbunden sind;
und, bevor man das chemisch reagierte Sandstrahl-Verbundmedium erstarren läßt, das innige Vermischen der Mischung des Sandstrahl-Verbundmediums, um eine einheitliche Mischung davon zu bilden.

8. Recyclingverfahren für ein Sandstrahl-Verbundmedium nach Anspruch 1, dadurch gekennzeichnet, daß der Formungsschritt die Schritte umfaßt:
Imprägnieren der zusätzlichen Schleifkomponente in die Trägerkomponente; und
Vermahlen des Sandstrahl-Verbundmediums zu einer Vielzahl von Körnchen, die jeweils eine Vielzahl von diskreten Teilchen einer Schleifkomponente enthalten, die durch die Trägerkomponente physikalisch miteinander verbunden sind.

9. Verfahren zur Herstellung eines recyclefähigen, körnigen Sandstrahl-Verbundmediums zur Verwendung für die Behandlung einer Oberfläche, um von dieser unerwünschte Verunreinigungen zu entfernen, wobei dieses Sandstrahl-Verbundmedium geeignet ist, mit einen Fluidstrom durch die gewünschte Sandstrahlvorrichtung befördert zu werden;
wobei dieses Verfahren die Schritte umfaßt:
Bildung von Körnchen aus dem Sandstrahl-Verbundmedium, wobei jedes Körnchen eine Vielzahl von diskreten Teilchen einer Schleifkomponente umfaßt, die durch eine Trägerkomponente, die bei Raumtemperatur fest ist, physikalisch miteinander verbunden sind, wobei die Trägerkomponente so ausgewählt ist, daß sie während der Verwendung des Sandstrahl-Verbundmediums mit einer solchen Geschwindigkeit verschleißt, daß kontinuierlich zusätzliche, tiefer liegende Schleifteilchen freigelegt werden, jedoch nicht mit einer solchen Geschwindigkeit, daß eine vorzeitige Trennung der Schleifteilchen von einer äußeren Oberfläche des Teilchens aus dem Verbundmedium ermöglicht wird;
Befördern des recyclefähigen Sandstrahl-Verbundmediums durch die gewünschte Sandstrahlvorrichtung, um eine gewünschte Oberfläche zu behandeln;
Sammeln des Sandstrahl-Verbundmediums mit einer Sammelvorrichtung und Reinigen des gesammelten Sandstrahl-Verbundmediums nach wenigstens einem Sandstrahlzyklus in einer Reinigungsvorrichtung;
Mischen von wenigstens einem von einer zusätzlichen Schleifkomponente und einer zusätzlichen Trägerkomponente mit dem gesammelten Sandstrahl-Verbundmedium; und
Formen der Mischung zu einer Vielzahl von Körnchen, die jeweils eine Vielzahl von diskreten Teilchen einer Schleifkomponente enthalten, die durch eine Trägerkomponente physikalisch miteinander verbunden sind.

10. Recyclingverfahren für ein verbrauchtes Sandstrahl-Verbundmedium, nachdem es durch eine gewünschte Sandstrahlvorrichtung befördert wurde, wobei das Sandstrahl-Verbundmedium eine Vielzahl von Körnchen umfaßt, die jeweils eine Vielzahl von diskreten Teilchen einer Schleifkomponente enthalten, die durch eine Trägerkomponente, die bei einer Temperatur unterhalb Raumtemperatur fest ist, physikalisch miteinander verbunden sind, wobei dieses Verfahren die folgenden Stufen, die bei einer Temperatur unter Raumtemperatur ablaufen, umfaßt:
Sammeln des Sandstrahl-Verbundmediums nach wenigstens einem Sandstrahlzyklus;
Mischen von wenigstens einem von einer zusätzlichen Schleifkomponente und einer zusätzlichen Trägerkomponente mit dem gesammelten Sandstrahl-Verbundmedium; und
Formen der Mischung des Sandstrahl-Verbundmediums zu einer Vielzahl von Körnchen, die jeweils eine Vielzahl von diskreten Teilchen der Schleifkomponente enthalten, die durch die Trägerkomponente physikalisch miteinander verbunden sind.

## Revendications

1. Procédé pour recycler un moyen de grenaillage composite usagé après avoir été propulsé à travers l'équipement de grenaillage souhaité, ledit moyen de grenaillage composite comprenant plusieurs granules qui contiennent chacun plusieurs particules discrètes d'un composant abrasif physiquement interconnectées les unes avec les autres par un élément de support, qui est un solide à température ambiante,
ledit procédé comprenant les étapes consistant à:
- collecter le moyen de grenaillage composite après au moins un cycle de grenaillage;
- mélanger au moins un des composants abrasifs supplémentaires et un composant de support supplémentaire avec le moyen de grenaillage composite collecté ; et
- former le mélange de moyen de grenaillage composite en plusieurs granules contenant chacun plusieurs particules discrètes du composant abrasif physiquement interconnectées les unes avec les autres par l'élément de support.

2. Procédé pour recycler le moyen de grenaillage composite selon la revendication 1, comprenant également l'une ou plusieurs des étapes suivantes consistant à
- laver, dans un dispositif de lavage, le moyen de grenaillage composite collecté avec une solution de lavage avant l'étape de mélange;
- nettoyer le moyen de grenaillage composite collecté avec un dispositif de nettoyage avant l'étape de mélange;
- tamiser le moyen de grenaillage composite collecté avant l'étape de mélange;
- utiliser le moyen de grenaillage composite plusieurs fois avant de recycler le moyen de grenaillage composite ; et
- séparer le moyen de grenaillage composite recyclable avec un dispositif de séparation des fins, débris et souillures après l'étape de collecte et avant l'étape de mélange.

3. Procédé pour recycler le moyen de grenaillage composite selon la revendication 2, comprenant également l'étape consistant à retirer l'humidité du moyen de grenaillage composite lavé avec un mécanisme de retrait d'humidité, avant l'étape de mélange.

4. Procédé pour recycler le moyen de grenaillage composite selon la revendication 1, caractérisé en ce que ladite étape de mélange comprend l'étape consistant à mélanger le composant abrasif supplémentaire et le composant de support supplémentaire avec le moyen de grenaillage composite collecté ; et
ladite étape consistant à former comprend les étapes consistant à:
- chauffer le mélange du moyen de grenaillage composite pour faire fondre le composant de support, qui est un solide à température ambiante;
- pennettre au moyen de grenaillage composite chauffé de refroidir à une température de solidification du composant de support et de ce fait solidifier le moyen de grenaillage composite ; et
- moudre le moyen de grenaillage composite en plusieurs granules contenant chacun plusieurs particules discrètes du composant abrasif physiquement interconnectées les unes avec les autres par l'élément de support.

5. Procédé pour recycler le moyen de grenaillage composite selon la revendication 4, comprenant également, avant de permettre au moyen de grenaillage composite chauffé de se solidifier, l'étape consistant à mélanger soigneusement le moyen de grenaillage composite chauffé pour former un mélange uniforme de celui-ci.

6. Procédé pour recycler le moyen de grenaillage composite selon la revendication 1, après l'étape de collecte mais avant l'étape de mélange, comprenant également une ou plusieurs des étapes suivantes consistant à:
- obliger le moyen de grenaillage composite collecté à gonfler en permettant au moyen de grenaillage composite collecté d'absorber du liquide;
- tamiser le moyen de grenaillage composite gonflé avec un dispositif de tamisage de manière à permettre aux fins et autres débris et souillures de passer à travers le dispositif de tamisage tout en retenant le moyen de grenaillage composite gonflé ; et
- retirer le liquide absorbé du moyen de grenaillage composite avec un mécanisme d'absorption du liquide.

7. Procédé pour recycler le moyen de grenaillage composite selon la revendication 1, caractérisé en ce que ladite étape de formation comprend les étapes consistant à:
- permettre au mélange du moyen de grenaillage composite avec au moins un des composants abrasifs supplémentaires et un composant de support supplémentaire de réagir chimiquement l'un avec l'autre;
- permettre au moyen de grenaillage composite qui a chimiquement réagi de se solidifier;
- moudre le moyen de grenaillage composite en plusieurs granules contenant chacun plusieurs particules discrètes du composant abrasif physiquement interconnectées les unes avec les autres par l'élément de support ; et
- avant de permettre au moyen de grenaillage composite qui a réagi chimiquement de se solidifier, mélanger soigneusement le moyen de grenaillage composite pour former un mélange uniforme de celui-ci.

8. Procédé pour recycler le moyen de grenaillage composite selon la revendication 1, caractérisé en ce que ladite étape de formation comprend les étapes consistant à:
- imprégner le composant abrasif supplémentaire dans le composant de support ; et
- moudre le moyen de grenaillage composite en plusieurs granules contenant chacun plusieurs particules discrètes du composant abrasif physiquement interconnectées les unes avec les autres par l'élément de support.

9. Procédé pour former un moyen de grenaillage composite granulé recyclable destiné à être utilisé dans le traitement d'une surface pour retirer les souillures non souhaitées de cette-ci, ledit moyen de grenaillage composite étant destiné à être propulsé via un jet de fluide à travers l'équipement de grenaillage souhaité; ledit procédé comprenant les étapes consistant à:
- former des granules du moyen de grenaillage composite, chacun desdits granules comprenant plusieurs particules discrètes du composant abrasif physiquement interconnectées les unes avec les autres par un élément de support, qui est solide à une température ambiante, le composant de support étant sélectionné pour s'user, durant l'utilisation du moyen de grenaillage composite, à une allure telle qu'il expose continuellement la particule abrasive sous-jacente supplémentaire, mais non pas à une allure qui permette la séparation prématurée des particules abrasives depuis une surface externe de celle particule de moyen composite;
- propulser le moyen de grenaillage composite recyclable à travers l'équipement de grenaillage composite pour traiter une surface souhaitée;
- collecter le moyen de grenaillage composite avec un dispositif de collecte et nettoyer le moyen de grenaillage composite collecté, après au moins un cycle de grenaillage, avec un dispositif de nettoyage;
- mélanger au moins un composant abrasif supplémentaire et un composant de support supplémentaire avec le moyen de grenaillage composite collecté ; et
- reformer le mélange en plusieurs granules comprenant plusieurs particules discrètes du composant abrasif physiquement interconnectées les unes avec les autres par un élément de support.

10. Procédé pour recycler un moyen de grenaillage composite usagé après avoir été propulsé à travers l'équipement de grenaillage composite souhaité, ledit moyen de grenaillage composite comprenant plusieurs granules qui contiennent chacun plusieurs particules discrètes d'un composant abrasif physiquement interconnectées les unes avec les autres par un élément de support, qui est un solide à une température inférieure à la température ambiante,
ledit procédé comprenant les étapes suivantes se produisant à une température inférieure à la température ambiante, consistant à:
- collecter le moyen de grenaillage composite après au moins un cycle de grenaillage;
- mélanger au moins un des composants abrasifs supplémentaires et un composant de support supplémentaire au moyen de grenaillage composite collecté ; et
- former le mélange de moyen de grenaillage composite en plusieurs granules contenant chacun plusieurs particules discrètes du composant abrasif physiquement interconnectées les unes avec les autres par l'élément de support.
